# EUROPEAN PATENT SPECIFICATION

(11) **EP 2 980 817 B1**
(45) Date of publication and mention of the grant of the patent: **25.12.2019**
(21) Application number: 14775274.5
(22) Date of filing: 19.03.2014
(51) Int. Cl.: H01G 11/24, H01M 4/36, H01M 4/587, H01G 11/34, H01G 11/42, H01G 11/32, H01M 4/133, H01M 10/0525, H01M 4/02, H01G 11/44

(54) **ELECTRODE ACTIVE MATERIAL, ELECTRODE, AND ELECTRICITY-STORAGE DEVICE**
ELEKTRODENAKTIVES MATERIAL, ELEKTRODE UND ELEKTRIZITÄTSSPEICHERVORRICHTUNG
MATÉRIAU ACTIF D'ÉLECTRODE, ÉLECTRODE, ET DISPOSITIF DE STOCKAGE D'ÉLECTRICITÉ

(30) Priority: 25.03.2013 JP 2013062256
(43) Date of publication of application: 03.02.2016
(73) Proprietor: JSR Corporation, Minato-ku Tokyo 105-8640 (JP); JM Energy Corporation, Yamanashi 409-1501 (JP)
(72) Inventor: TANAKA, Ryo, Tokyo 105-8640 (JP); SHIMIZU, Takahiro, Tokyo 105-8640 (JP); UTAKA, Tomohiro, Hokuto-shi Yamanashi 409-1501 (JP)
(74) Representative: TBK
(86) International application number: PCT/JP2014/057558
(87) International publication number: WO 2014/156892

(56) References cited:
- EP-A1- 1 675 141
- EP-A1- 1 775 785
- JP-A- H1 079 327
- JP-A- 2001 068 383
- JP-A- 2008 147 283
- JP-A- 2009 246 137
- JP-A- 2010 086 955
- JP-A- 2010 262 968
- JP-A- 2011 258 643
- JP-A- 2012 028 668
- US-A1- 2002 076 614
- US-A1- 2009 097 188

## Description

### Technical Field

The present invention relates to electrode active materials, electrodes and electrical storage devices. More particularly, the invention relates to electrode active materials suitably used in devices such as electrical storage devices including lithium ion secondary batteries and lithium ion capacitors, to electrodes containing the electrode active materials, and to electrical storage devices having the electrode as a negative electrode.

### Background Art

Remarkable progress has occurred recently in miniaturization and weight reduction of electronic devices. Consequently, greater demands have been placed on the reduction of size and weight of batteries used as power supplies for driving such electronic devices. To meet such demands for miniaturization and weight reduction, nonaqueous electrolyte secondary batteries represented by lithium ion secondary batteries have been developed as electrical storage devices. Further, electric double layer capacitors are known as electrical storage devices exhibiting excellent characteristics such as high output density and good cycle performance. Furthermore, lithium ion capacitors are known which are based on a combination of electrical storage principles of lithium ion secondary batteries and electric double layer capacitors. Lithium ion capacitors are electrical storage devices that comply with applications requiring high energy density characteristics and high output characteristics.

Negative electrode materials used for such electrical storage devices have been extensively studied. For example, negative electrode active materials for lithium ion secondary batteries have been conventionally used graphite particles. However, using directly graphite particles as the negative electrode active material is known to easily lead to causing increase in irreversible capacity and decrease in cycle characteristics which are considered to be due to electrolytic solution decomposition reaction taking place on the particle surface with high activity. In response thereto, Patent Literatures 1 and 2, for example, propose using graphite whose surfaces are coated with low-crystalline or amorphous carbon; and Patent Literature 3 proposes using composite particles given by forming a coating layer composed of a carbide of a nitrogen-containing material on surfaces of graphite particles.

### Citation List

### Patent Literature

[Patent Literature 1] JP-A-H4-368778
[Patent Literature 2] JP-A-2002-151069
[Patent Literature 3] JP-A-2010-118243

JP 2011 258643 A describes an electrode active material comprising a carbon material and having 0.1 to 0.3 mmol/g of acidic functional groups.

### Summary of the Invention

### Technical Problem

However, electrical storage devices utilizing these conventional active materials are still incapable of realizing excellent characteristics, especially at low temperatures.

It is therefore an object of the present invention to provide an electrode active material which allows an electrical storage device to exhibit excellent characteristics at low temperatures.

### Solution to Problem

The present inventors carried out studies in view of the above circumstances. As a result, the present inventors have found that the above problem can be solved by using an electrode active material having basic functional groups in an amount not less than a specific value. The present invention has been completed based on the finding.

That is, the present invention provides an electrode active material comprising a carbon material and having 0.020 mmol/g to 0.20 mmol/g of basic functional groups, wherein the carbon material is a composite carbon material that comprises a core-forming carbon material and a coating carbon material for coating at least part of the core-forming carbon material.

Also, the invention provides an electrode comprising said electrode active material. Further, the invention provides an electrical storage device comprising said electrode as a negative electrode.

### Advantageous Effects of Invention

The inventive electrode active materials allow electrical storage devices to exhibit low internal resistance at low temperatures and achieve excellent cycle characteristics. Thus, the electrode active materials of the invention are highly useful as electrode materials for electrical storage devices such as lithium ion secondary batteries and lithium ion capacitors.

### Brief Description of Drawing

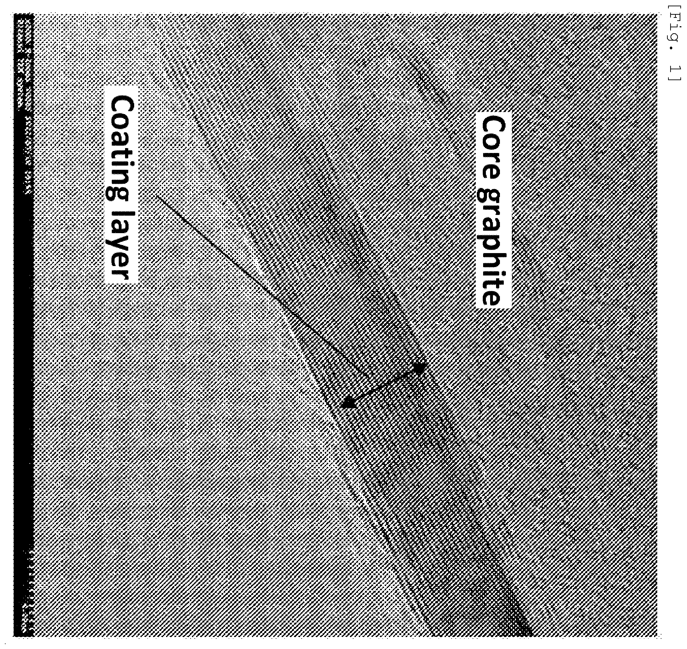

[Fig. 1] Fig. 1 is a transmission electron microscope (TEM) photograph showing a cross-section of electrode active material particles obtained in Example.

### Description of Embodiments

The present invention will be described in detail hereinbelow.

### Electrode active materials

The electrode active material of the invention is characterized by containing a carbon material and having not less than 0.020 mmol/g of basic functional groups. The "amount of basic functional groups" as used herein is a value measured by a method described in Example provided later.

The amount of basic functional groups is 0.020 to 0.20 mmol/g, preferably 0.020 to 0.15 mmol/g, and particularly preferably 0.020 to 0.10 mmol/g. If the amount of basic functional groups is less than 0.020 mmol/g, electrical storage devices having excellent properties at low temperature may not be obtained. On the other hand, if the amount of basic functional groups is excessively large, the electrode strength may be lowered, electrode slurry with fluidity may not be obtained easily, and cycle characteristics of the resultant electrical storage device may be deteriorated.

Preferably, the electrode active material of the invention has acidic functional groups in an amount of not more than 0.20 mmol/g, more preferably not more than 0.15 mmol/g, and particularly preferably not more than 0.080 mmol/g. If the amount of acidic functional groups is excessively large, cycle characteristics of the resultant electrical storage device may be deteriorated. The "amount of acidic functional groups" as used herein is a value measured by a method described in Example provided later.

The electrode active material of the invention is generally in the form of particles. The 50% volume cumulative diameter D50 of the inventive electrode active material is preferably 0.5 to 50 µm, and particularly preferably 1 to 30 µm. If D50 is too small, the resultant electrical storage devices have possibilities that cycle characteristics may be deteriorated, charge/discharge efficiency may be lowered and energy density may be decreased due to low bulk density of the active material layer. If D50 is excessively large, the internal resistance of the electrical storage devices may be increased. If it is desired to particularly lower the internal resistance at low temperature of the electrical storage devices, D50 is preferably 1 to 10 µm, and particularly preferably 1 to 5 µm. D50 is measured by a laser diffraction/scattering method.

If it is desired to particularly lower the internal resistance at low temperature of the electrical storage device, the electrode active material of the invention has a volume of macropores with 50 to 400 nm pore diameter which preferably ranges from 0.01 to 0.40 cc/g, more preferably 0.02 to 0.35 cc/g, and particularly preferably 0.05 to 0.30 cc/g. In the invention, the macropore volume indicates a volume of pores with 50 to 400 nm pore diameters according to DH (Dollimore Heal) analysis with respect to a nitrogen adsorption isotherm obtained by a nitrogen adsorption method at 77 K with automatic specific surface area/pore size distribution analyzer BELSORP-mini II manufactured by BEL Japan, Inc.

The specific surface area of the inventive electrode active material is preferably 0.01 to 50 m²/g, and particularly preferably 0.1 to 30 m²/g. If the specific surface area is too small, the internal resistance of the electrical storage device may be increased. On the other hand, if the specific surface area is excessively large, the charge/discharge efficiency may be lowered and the electrode strength may be insufficient. The specific surface area is measured by a nitrogen adsorption method.

The inventive electrode active material contains a carbon material. The carbon material is a composite carbon material containing two or more kinds of carbon materials (hereinafter, also referred to simply as the "composite carbon material") . The composite carbon material, which can be produced by an appropriate method, is produced preferably by mixing and kneading carbon material particles having basic functional groups in an amount of less than 0.020 mmol/g together with a nitrogen-containing organic compound to coat the particles with the organic compound, and thereafter carbonizing the coated particles by calcination at 700 to 2000°C in the presence of an inert gas. The composite carbon material is a composite carbon material that contains a core-forming carbon material and a coating carbon material which coats at least part of the core-forming carbon material.

Examples of the core-forming carbon material in the composite carbon material include soft carbons such as petroleum cokes, coal pitch cokes and polyvinyl chloride carbons; hard carbons such as carbon blacks, polyvinylidene chloride carbons, sugar carbons, cellulose carbons, phenolic resin carbons and charcoals; graphite-like materials obtained by heat-treating the above soft carbons or hard carbons; powders of carbon fibers; and other carbon materials such as natural graphites and artificial graphites. The core-forming carbon material is preferably a graphite crystalline carbon, particularly a natural or artificial graphite, having a (002) interplanar distance, d002, in the range from 0.335 to 0.338 nm according to X-ray diffractometry. The core-forming carbon material has basic functional groups preferably in an amount of less than 0.020 mmol/g, and particularly preferably in an amount of not more than 0.015 mmol/g.

In the invention, the core-forming carbon materials may be used singly, or two or more kinds may be used in combination.

The organic compound serving as a raw material of the coating carbon material in the composite carbon material is preferably a nitrogen-containing organic compound, with its examples including nitrogen-containing pitches; thermoplastic resins such as polyacrylonitriles, styrene-acrylonitrile copolymers (AS resin), acrylonitrile-butadiene copolymers, acrylonitrile-ethylene-styrene copolymers (AES resin), acrylonitrile-chlorinated polyethylene-styrene copolymers (ACS resin), acrylonitrile-styrene-acrylate copolymers (ASA resin) and polyimides; thermosetting resins such as melamine resins and aniline resins; and synthetic rubbers such as NBR.

The organic compounds serving as raw materials of the coating carbon material may be used singly, or may be used as a mixture of two or more kinds.

In the composite carbon material, when the core-forming carbon material having basic functional groups in an amount of less than 0.020 mmol/g and a raw material of the coating carbon material which is a nitrogen-containing organic compound are used, adjusting the type and the amount of that organic compound can lead to adjusting the amount of the basic functional groups of the obtainable composite carbon material.

The coating carbon material may be the one given by combining the organic compound with carbon blacks such as acetylene blacks, Ketjen blacks and furnace blacks; or carbon fibers such as polyacrylonitrile-based carbon fibers, pitch-based carbon fibers and vapor grown carbon fibers.

The amount of the organic compound used in the invention which serves as the raw material of the coating carbon material, which varies depending on its type, is preferably 5 to 150% by mass, more preferably 10 to 100% by mass, and particularly preferably 10 to 80% by mass, with respect to the core-forming carbon material.

In the case where carbon black is used in combination as the coating carbon material, the amount of carbon black is preferably not more than 50% by mass, more preferably not more than 30% by mass, and particularly preferably not more than 20% by mass, with respect to the core-forming carbon material. The mixing ratio between carbon black and the organic compound (mass of carbon black: mass of the organic compound) preferably ranges from 80:20 to 0:100.

For carbonization of the organic compound serving as a raw material of the coating carbon material, it is preferred that the organic compound be calcined at a temperature ranging from 700 to 2000°C, particularly preferably at a temperature ranging from 800 to 1500°C, in the presence of an inert gas. The organic compound, before calcined, may be made infusible by being heated, in the presence of an oxygen-containing atmosphere such as air, to a temperature ranging from 100 to 500°C whereby the yield of carbon remaining after the calcination can be increased. By the composite carbon material being produced in such a manner, electrode active materials having much superior properties desired are obtainable.

The electrode active material of the invention may contain components including elements other than carbon, for example, by allowing pore surfaces of the core-forming carbon material to support particles of metals such as silicon and tin.

The electrode active material obtained as described above allows an electrical storage device using this to exhibit excellent low-temperature characteristics. By the use of the inventive electrode active material, the desired effects are obtained more markedly. Thus, the inventive electrode active material is suitably used as electrode active material for electrical storage devices utilizing the intercalation/deintercalation of lithium ions, and is particularly suitably used as a negative electrode active material for lithium ion secondary batteries or lithium ion capacitors.

### Electrodes

The electrode of the invention contains the inventive electrode active material. Usually, the electrode has a collector and an active material layer on the collector which contains components such as the inventive electrode active material and a binder. The active material layer may be usually produced by applying a slurry containing components such as the electrode active material and a binder onto a collector, and drying the wet coating. The electrode of the invention is preferably a negative electrode utilizing the inventive electrode active material as a negative electrode active material, and is particularly preferably a negative electrode for a lithium ion secondary battery or a negative electrode for a lithium ion capacitor.

In the electrode of the invention, the electrode active materials may be used singly, or two or more kinds may be used in combination.

When the inventive electrode is a positive electrode, such a metal as aluminum or stainless steel is a preferred material for the collector. When the inventive electrode is a negative electrode, such a metal as copper, nickel or stainless steel is a preferred collector material. The thickness of the collectors is usually 10 to 50 µm for both positive and negative electrodes. In the case where the electrodes are to be used for lithium ion capacitors, the collectors of positive and negative electrodes preferably have throughholes extending between the front and the back surfaces, and the open area ratio of such collectors is preferably 30 to 70%. Examples of such collectors with throughholes include expanded metals, punched metals, and porous metal foils having etched throughholes.

Examples of the binders used for the inventive electrodes include rubber-based binders such as styrene-butadiene rubbers (SBR) and acrylonitrile-butadiene rubbers (NBR); fluoro-based resins such as polyethylene tetrafluoride and polyvinylidene fluoride; polypropylenes, polyethylenes, and such fluorine-modified (meth)acrylic-based binders as disclosed in JP-A-2009-246137. The amount of the binder is not particularly limited, but is preferably 1 to 20% by mass, and particularly preferably 2 to 10 % by mass relative to the inventive electrode active material.

The binders may be used singly, or two or more kinds may be used in combination.

In the electrode of the invention, the active material layer may further contain additives, for example, conductive agents such as carbon blacks, graphites and metal powders; or thickening agents such as carboxymethyl cellulose, sodium salt thereof or ammonium salt thereof, methyl cellulose, hydroxymethyl cellulose, ethyl cellulose, hydroxypropyl cellulose, polyvinyl alcohols, oxidized starches, starch phosphates and casein.

The thickness of the active material layer containing the inventive electrode active material is not particularly limited, but is usually 5 to 500 µm, preferably 10 to 200 µm, and particularly preferably 10 to 100 µm. When the electrode is used for a lithium ion secondary battery, the density of the active material layer containing the inventive electrode active material is preferably 1.50 to 2.00 g/cc, and particularly preferably 1.60 to 1.90 g/cc. When the electrode is used for a lithium ion capacitor, the density of the active material layer containing the inventive electrode active material is preferably 0.50 to 1.50 g/cc, and particularly preferably 0.70 to 1.20 g/cc. These densities of the active material layer ensure a good balance between the retention of an electrolytic solution and the contact resistance between active materials. Thus, the electrical storage device achieves high capacity and low resistance.

### Electrical storage devices

The electrical storage device of the invention has the inventive electrode as a negative electrode. Examples of the electrical storage devices include nonaqueous electrolyte secondary batteries, electric double layer capacitors and lithium ion capacitors. In the invention, the electrical storage devices are preferably lithium ion secondary batteries or lithium ion capacitors having the inventive electrode as a negative electrode.

The electrical storage device of the invention has at least a positive electrode and an electrolyte in addition to the inventive electrode used as a negative electrode. The configurations and the production of the inventive electrodes used as a negative electrode are as described above in "Electrodes".

In the electrical storage devices of the invention, the basic configurations and the production of the positive electrodes may be the same as described above in the section of "Electrodes" except that the active materials are different. When the electrical storage devices of the invention are lithium ion secondary batteries, examples of the positive electrode active materials include lithium transition metal complex oxides such as lithium cobalt oxides, lithium nickel oxides and lithium manganese oxides; transition metal oxides such as manganese dioxide; and carbonaceous materials such as graphite fluorides. When the electrical storage devices of the invention are lithium ion capacitors, examples of the positive electrode active materials include activated carbons and polyacene-based materials. These positive electrode active materials may be used singly, or two or more kinds may be used in combination.

In the electrical storage device of the invention, the electrolyte is usually used as an electrolytic solution in which electrolyte is dissolved in a solvent. The electrolyte is preferably the one which can form lithium ions. Specific examples include LiClO₄, LiAsF₆, LiBF₄, LiPF₆, LiN (C₂F₅SO₂)₂, LiN (CF₃SO₂)₂ and LiN (FSO₂)₂. These electrolytes may be used singly, or two or more kinds may be used in combination.

The solvent for dissolving the electrolyte is preferably an aprotic organic solvent. Specific examples include ethylene carbonate, propylene carbonate, butylene carbonate, 1-fluoroethylene carbonate, 1-(trifluoromethyl) ethylene carbonate, dimethyl carbonate, diethyl carbonate, methyl ethyl carbonate, γ-butyrolactone, acetonitrile, dimethoxyethane, tetrahydrofuran, dioxolane, methylene chloride and sulfolane. These solvents may be used singly, or two or more kinds may be used in combination. In the invention, in terms of being able to enhance the effects desired, it is preferred to use, as the solvent, at least ethylene carbonate or propylene carbonate, and it is more preferred to use at least ethylene carbonate, propylene carbonate and diethyl carbonate.

In order to reduce the internal resistance by the electrolytic solution, the concentration of the electrolyte in the electrolytic solution is preferably not less than 0.1 mol/L, and more preferably in the range from 0.5 to 1.5 mol/L. The electrolytic solution may contain additives such as vinylene carbonate, vinyl ethylene carbonate, succinic anhydride, maleic anhydride, propane sultone and diethyl sulfone.

Although the electrolyte may be usually used in a liquid form as described above, a gel or solid electrolyte may be used in order to prevent leakage.

When the electrolyte is used in the form of electrolytic solution, the positive and negative electrodes are usually separated from each other via a separator to prevent physical contact between the positive and negative electrodes. Examples of the separators include nonwoven fabrics and porous films made of materials such as cellulose rayons, polyethylenes, polypropylenes, polyamides, polyesters and polyimides.

Examples of the structures of the electrical storage devices include stacked cells in which three or more plate-shaped positive electrodes and negative electrodes each are stacked on top of one another via separators and a unit thus stacked is sealed in exterior films, and wound cells in which positive and negative electrode strips are wound via separators and a unit thus wound is housed in polygonal or cylindrical containers.

In the case where the inventive electrical storage device is a lithium ion capacitor, it is preferable that the negative electrode and/or the positive electrode be pre-doped with lithium ions such that the positive electrode potential becomes not more than 2.0 V (vs. Li/Li⁺) after the positive and negative electrodes are short-circuited. Exemplary methods for lithium ion pre-doping are disclosed in, for example, WO 1998/033227 and WO 2000/007255.

### Examples

The present invention will be described in detail based on examples hereinbelow without limiting the scope of the invention.

In Examples and Comparative Examples provided below, properties of the electrode active materials were measured by methods described below. Also, cross-sections of particles of electrode active materials obtained in Examples described below were observed by using a transmission electron microscope (TEM). A representative example of TEM photographs obtained is shown in Fig. 1, which demonstrates the electrode active material obtained is a composite carbon material composed of a core-forming carbon material and a coating carbon material that coats at least part of the core-forming carbon material.

### <Measurement of amounts of functional groups>

### (1) Quantification of amount of basic functional groups

A substance to be measured, the electrode active material, precisely weighing about 1 g, was put in a 50 ml conical flask. Thereto, 10.0 ml of 0.05 N hydrochloric acid (manufactured by Wako Pure Chemical Industries, Ltd.) was collected and added with a whole pipette. A stopper was attached to the flask, and a connecting section between the flask and the stopper was sealed with a seal tape. Then, by applying ultrasonic waves for 20 minutes with an ultrasonic wave washing machine set at 25°C (ASU-10 manufactured by AS ONE Corporation, intensity: High), the electrode active material was caused to be well dispersed. Thereafter, the electrode active material was put through filter paper (Whatman42 filter paper manufactured by GE Healthcare UK Limited, 110 mm in diameter) to give a filtrate, from which a portion in an amount of 2.0 ml was collected with a whole pipette and put into a 100 ml conical beaker. Thereto, a methyl red-methylene blue ethanol solution (manufactured by Wako Pure Chemical Industries, Ltd.) as an indicator was added in three droplets with a dropping pipette. The contents in the conical beaker were stirred with a magnetic stirrer, during which an aqueous solution of 0.05 N NaOH (manufactured by Wako Pure Chemical Industries, Ltd.) was dropwise added to perform titration while a neutralization point was determined based on the change of color by the indicator (from purple color to green color). Blank titration was performed in the same manner, where the electrode active material was not added in 0.05 N hydrochloric acid. A difference in titration value between the blank titration and the titration using the electrode active material was determined, from which the amount of basic functional groups was determined.

### (2) Quantification of amount of acidic functional groups

A substance to be measured, the electrode active material, precisely weighing about 1 g, was put in a 50 ml conical flask. Thereto, 10.0 ml of an aqueous solution of 0.1 N sodium ethoxide (manufactured by Wako Pure Chemical Industries, Ltd.) was collected and added with a whole pipette. A stopper was attached to the flask, and a connecting section between the flask and the stopper was sealed with a seal tape. Then, by applying ultrasonic waves for 20 minutes with an ultrasonic wave washing machine set at 25°C (ASU-10 manufactured by AS ONE Corporation, intensity: High), the electrode active material was caused to be well dispersed. Thereafter, the electrode active material was put through filter paper (Whatman42 filter paper manufactured by GE Healthcare UK Limited, 110 mm in diameter) to give a filtrate, from which a portion in an amount of 2.0 ml was collected with a whole pipette and put into a 100 ml conical beaker. Thereto, a methyl red-methylene blue ethanol solution (manufactured by Wako Pure Chemical Industries, Ltd.) as an indicator was added in three droplets with a dropping pipette. The contents in the conical beaker were stirred with a magnetic stirrer, during which 0.05 N hydrochloric acid (manufactured by Wako Pure Chemical Industries, Ltd.) was dropwise added to perform titration while a neutralization point was determined based on the change of color by the indicator (from green color to purple color). Blank titration was performed in the same manner, where the electrode active material was not added in an aqueous solution of 0.1 N sodium ethoxide. A difference in titration value between the blank titration and the titration using the electrode active material was determined, from which the amount of acidic functional groups was determined.

### <Measurement of macropore volume>

The macropore volume was determined by DH analysis with respect to a nitrogen adsorption isotherm obtained by a nitrogen adsorption method at 77 K with automatic specific surface area/pore size distribution analyzer BELSORP-mini II manufactured by BEL Japan, Inc. At this time, the measurement mode was "high-precision mode", and as a sample cell, a cell of about 1.8 cm³, which is a standard cell, was used. The sample amount was weighed by using an electronic balance to a 10⁻⁴ g order so as to fall within the range of 0.1500 to 0.2500 g.

### <Measurement of 50% volume cumulative diameter D50>

The 50% volume cumulative diameter D50 was measured with laser diffraction/scattering particle size distribution analyzer LA-950 V2 manufactured by HORIBA Ltd.

### <Production of electrode active material>

### [Example 1]

7 mol of quinoline and 0.63 mol of hydrogen fluoride were fed into an autoclave, and stirred slowly, during which 0.26 mol of boron trifluoride was supplied. Then, under stirring, polymerization reaction was allowed to proceed at 230°C over a period of 4 hours. After the reaction, catalyst residue was removed by filtration, and further nitrogen was blown at 3 liters per minute at 340°C overnight, whereby catalyst residue, unreacted substances and low-boiling contents were removed. The yield of a pitch obtained was 80%, and the pitch had a softening point of 216°C. The pitch contained nitrogen in an amount of 10%, i.e., pitch high in nitrogen content.

100 parts by mass of artificial graphite manufactured by TIMCAL (50% volume cumulative diameter D50: 13 µm, d(002) interplanar distance according to X-ray diffractometry: 0.3356 nm, specific surface area: 12 m²/g, amount of basic functional groups: 0.008 mmol/g, hereinafter abbreviated as the "artificial graphite A") as a core-forming carbon material, 20 parts by mass of a commercially available pitch having a softening point of 90°C (hereinafter abbreviated as the "pitch C"), and 10 parts by mass of the pitch high in nitrogen content obtained by the above method, were kneaded with a kneader for 1 hour while being heated to 250°C. The resultant artificial graphite/pitch composite was crushed with a cutter mill. Then, the composite crushed was carbonized by being calcined under nitrogen atmosphere at 1000°C for 3 hours. Thereafter, the composite calcined was pulverized with a ball mill, and the composite pulverized was put through a sieve with an opening of 63 µm, so that an electrode active material (product put through) was obtained. In the resultant electrode active material, the volume cumulative diameter D50 was 14 µm, the amount of basic functional groups was 0.025 mmol/g, the amount of acidic functional groups was 0.053 mmol/g, and the macropore volume was 0.016 cc/g.

### [Examples 2 and 3]

An electrode active material was produced in the same manner as in Example 1, except that the amounts of the pitch C and the pitch high in nitrogen content were changed as shown in Table 1. Evaluation results of the electrode active material obtained are shown in Table 1.

### [Example 4]

An electrode active material was produced in the same manner as in Example 1, except that in Example 1, at the time of kneading with the kneader, 5 parts by mass of a commercially available acetylene black was further added. Evaluation results of the electrode active material obtained are shown in Table 1.

### [Example 5 and Reference Example 6]

An electrode active material was produced in the same manner as in Example 1, except that in Example 1, the pitch high in nitrogen content was replaced by a commercially available polyacrylonitrile resin (1000N manufactured by Mitsui Chemicals, Inc.), the amounts of the pitch C and the polyacrylonitrile resin were changed as shown in Table 1, and the calcination was performed at 1200°C for 1 hour. Evaluation results of the electrode active material obtained are shown in Table 1.

### [Examples 7 and 8]

An electrode active material was produced in the same manner as in Example 4, except that in Example 4, the pitch high in nitrogen content was replaced by NBR containing about 35% by mass of acrylonitrile (manufactured by JSR Corporation), the amounts of the pitch C, NBR and acetylene black were changed as shown in Table 1, and the calcination was performed at 900°C for 5 hours. Evaluation results of the electrode active material obtained are shown in Table 1.

### [Example 9]

An electrode active material was produced in the same manner as in Example 1, except that 20 parts by mass of the pitch C and 10 parts by mass of the pitch high in nitrogen content were replaced by 50 parts by mass of a styrene-acrylonitrile copolymer containing about 30% by mass of acrylonitrile (manufactured by Techno Polymer Co., Ltd.) and the calcination was performed at 1100°C for 2 hours. Evaluation results of the electrode active material obtained are shown in Table 1.

### [Example 10]

An electrode active material was produced in the same manner as in Example 7, except that 100 parts by mass of artificial graphite manufactured by TIMCAL (50% volume cumulative diameter D50: 3 µm, d(002) interplanar distance according to X-ray diffractometry: 0.3365 nm, specific surface area: 26 m²/g, amount of basic functional groups: 0.011 mmol/g, hereinafter abbreviated as the "artificial graphite B") as a core-forming carbon material, 25 parts by mass of the pitch C, 25 parts by mass of NBR containing about 35% by weight of acrylonitrile (manufactured by JSR Corporation) and 10 parts by mass of acetylene black, were kneaded. Evaluation results of the electrode active material obtained are shown in Table 1.

### [Comparative Example 1]

The artificial graphite A, with no treatments applied thereto, was provided as an electrode active material.

### [Comparative Example 2]

The artificial graphite A alone was calcined under the same conditions as in Example 1, and the resultant product was defined as an electrode active material.

### [Comparative Example 3]

An electrode active material was produced in the same manner as in Example 1, except that in Example 1, the pitch high in nitrogen content was not used, and the amount of the pitch C was changed as shown in Table 1. Evaluation results of the electrode active material obtained are shown in Table 1.

### [Comparative Example 4]

An electrode active material was produced in the same manner as in Example 1, except that in Example 1, the pitch C and the pitch high in nitrogen content were replaced by urethane resin particles whose 50% volume cumulative diameter D50 is 200 µm (manufactured by Idemitsu Technofine Co., Ltd.) in an amount indicated in Table 1, and that the calcination was performed at 800°C for 2 hours. Evaluation results of the electrode active material obtained are shown in Table 1.

### [Comparative Example 5]

An electrode active material was produced in the same manner as in Comparative Example 4, except that in Comparative Example 4, the urethane resin particles were replaced by urea particles having a particle diameter of from 10 µm to 500 µm (manufactured by Kishida Chemical Co., Ltd.) in an amount indicated in Table 1. Evaluation results of the electrode active material obtained are shown in Table 1.

### [Comparative Example 6]

An electrode active material was produced in the same manner as in Comparative Example 4, except that in Comparative Example 4, the urethane resin particles were replaced by an acrylonitrile-butadiene-styrene resin having an average particle diameter of 2 mm (ABS resin manufactured by SANPLATEC CO., LTD.) in an amount indicated in Table 1. Evaluation results of the electrode active material obtained are shown in Table 1.

### (Production of electrodes and electrical storage devices)

### (1) Fabrication of negative electrodes

Both surfaces of a punched copper foil (negative electrode collector) with a throughhole diameter of 300 µm, an open area ratio of 55% and a thickness of 15 µm were coated with a slurry which contained an electrode active material described in Table 1 and a SBR binder (TRD2001 manufactured by JSR Corporation), using a vertical die double-side coating machine under coating conditions where the coating width was 65 mm and the coating rate was 8 m/min to a target coating thickness (layer thickness) of the coatings on both sides combined of 45 µm. After the double-side coating, the coatings were dried at 200°C for 24 hours under reduced pressure to form negative electrode active material layers as electrode layers on the front and the back surfaces of the negative electrode collector. In the formation of the negative electrode active material layers, the front and the back surfaces of the negative electrode collector were coated in such a manner that a section in which the electrode layers were formed on both sides of the collector (hereinafter, also referred to as "coated section" in the negative electrode sheet) and a section free from the electrode layers (hereinafter, also referred to as "uncoated section" in the negative electrode sheet) would be formed.

The negative electrode collector having the negative electrode material layers thus obtained was cut to a 65 mm × 100 mm size in which the coated section was 65 mm × 85 mm and the uncoated section was 65 mm × 15 mm. Thus, a negative electrode sheet was fabricated in which the electrode layers were formed on both surfaces of the negative electrode collector.

### (2) Fabrication of positive electrodes

Both surfaces of an etched aluminum foil (positive electrode collector) with a pore diameter of 300 µm, an open area ratio of 20% and a thickness of 30 µm were coated with a conductive coating material using a vertical die double-side coating machine under coating conditions where the coating width was 60 mm and the coating rate was 8 m/min to a target coating thickness of the coatings on both sides combined of 10 µm. After the double-side coating, the coatings were dried at 200°C for 24 hours under reduced pressure to form conductive layers on the front and the back surfaces of the positive electrode collector.

The conductive layers on the front and the back surfaces of the positive electrode collector were then coated with a slurry which contained activated carbon particles having 50% volume cumulative diameter D50 of 3 µm and an acrylic-based binder, using a vertical die double-side coating machine under coating conditions where the coating rate was 8 m/min to a target coating thickness (layer thickness) of the coatings on both sides combined of 50 µm. After the double-side coating, the coatings were dried at 200°C for 24 hours under reduced pressure to form positive electrode active material layers as electrode layers on the conductive layers. In the formation of the positive electrode active material layers, the front and the back surfaces of the positive electrode collector were coated in such a manner that a section in which the conductive layers and the electrode layers were formed on both sides of the collector (hereinafter, also referred to as "coated section" in the positive electrode sheet) and a section free from the conductive layers and the electrode layers (hereinafter, also referred to as "uncoated section" in the positive electrode sheet) would be formed.

The positive electrode collector having the positive electrode active material layers thus obtained was cut to a 60 mm × 95 mm size in which the coated section was 60 mm × 80 mm and the uncoated section was 60 mm × 15 mm. Thus, a positive electrode sheet was fabricated in which the electrode layers were formed on both surfaces of the positive electrode collector.

### (3) Fabrication of separators

Separators were fabricated by cutting a cellulose/rayon composite material film having a thickness of 35 µm and a gas permeability of 100 sec/100 ml, to a 67 mm × 90 mm size.

### (4) Fabrication of lithium ion capacitor elements

Ten positive electrode sheets obtained in "(2) Fabrication of positive electrodes", eleven negative electrode sheets obtained in "(1) Fabrication of negative electrodes", and twenty-two separators obtained in " (3) Fabrication of separators" were stacked on top of one another in the order of separator, negative electrode sheet, separator and positive electrode sheet. The four corners of the stack were fastened with a tape, thereby fabricating an electrode stack unit. In this fabrication of the electrode stack unit, the positive electrode sheets and the negative electrode sheets were stacked in such a manner that their respective coated sections would be opposed to each other via the separators and their respective uncoated sections would protrude from the separators on opposite sides to each other.

Next, a 100 µm thick lithium electrode was cut into a foil and was compression bonded to expanded copper with a thickness of 25 µm (manufactured by NIPPON METAL INDUSTRY CO., LTD.) to fabricate a lithium ion supply member. This lithium ion supply member was arranged on top of the electrode stack unit (on one outermost layer in the lamination direction of the electrode stack unit) so as to be opposed to the negative electrode.

Power supply aluminum tabs for positive electrodes were provided which were 50 mm in width, 50 mm in length and 0.2 mm in thickness. In these power supply tabs, sealant films had been thermal fusion bonded to the sealing portions beforehand. The tabs were placed on and welded to the uncoated sections of the ten positive electrode sheets constituting the electrode stack unit. Separately, power supply copper tabs for negative electrodes were provided which were 50 mm in width, 50 mm in length and 0.2 mm in thickness. In these power supply tabs, sealant films had been thermal fusion bonded to the sealing portions beforehand. The tabs were placed on and welded to the uncoated sections of the eleven negative electrode sheets constituting the electrode stack unit, as well as to the lithium ion supply member. Thus, a lithium ion capacitor element was fabricated.

### (5) Fabrication of lithium ion capacitors

An exterior film 1 with a size 90 mm in length, 117 mm in width and 0.15 mm in thickness was provided which was a stacked film including a polypropylene layer, an aluminum layer and a nylon layer. In this exterior film 1, a central portion 70 mm in length and 97 mm in width had been squeezed. Further, an exterior film 2 with a size 90 mm in length, 117 mm in width and 0.15 mm in thickness was provided which was a stacked film including a polypropylene layer, an aluminum layer and a nylon layer.

Next, the lithium ion capacitor element was disposed at an accommodation section of the exterior film 2 such that the positive electrode power supply tabs and the negative electrode power supply tabs became protrudent outward from ends of the exterior film 2. The exterior film 1 was superposed on the lithium ion capacitor element, and outer peripheries on three sides (including the two sides from which the positive electrode power supply tabs and the negative electrode power supply tabs were protrudent) of the exterior films 1 and 2 were thermal fusion bonded with each other.

Separately, an electrolytic solution containing 1.2 mol/L of LiPF₆ was prepared using a mixed solvent which contained ethylene carbonate, propylene carbonate and diethyl carbonate (3:1:4 by volume). The electrolytic solution was poured through the open end of the exterior films 1 and 2. Thereafter, the exterior films 1 and 2 were completely thermal fusion bonded with each other. Then, the thermal fusion product was allowed to stand at room temperature for 10 days.

In the above manner, a laminated exterior lithium ion capacitor cell sample (hereinafter, also referred to simply as the "cell") was fabricated.

### (Evaluation of capacitance and direct current internal resistance)

The cell fabricated above was charged at a current of 10 A in an environment at 25°C ± 5°C until the cell voltage reached 3.8 V, and thereafter the voltage was maintained for 30 minutes. Next, the cell was discharged at 10 A until the cell voltage became 2.2 V, when the capacitance (F) was measured. The direct current internal resistance (25°C direct current internal resistance) was evaluated by dividing the difference in voltage between immediately before discharging and 100 msec after the initiation of discharging by the discharge current. The direct current internal resistance (-30°C direct current internal resistance) was similarly evaluated in an environment at -30°C ± 5°C. The results are described in Table 1.

### (Evaluation of charge/discharge cycle characteristics)

The cell fabricated above was subjected to 100,000 cycles of constant current (CC) charging and discharging at 25°C with a current density of 100 C between 3.8 V and 2.2 V. The discharge capacity retention (%) was calculated based on the discharge capacity after the 100,000 cycles relative to the initial discharge capacity. The results are described in Table 1.

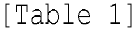

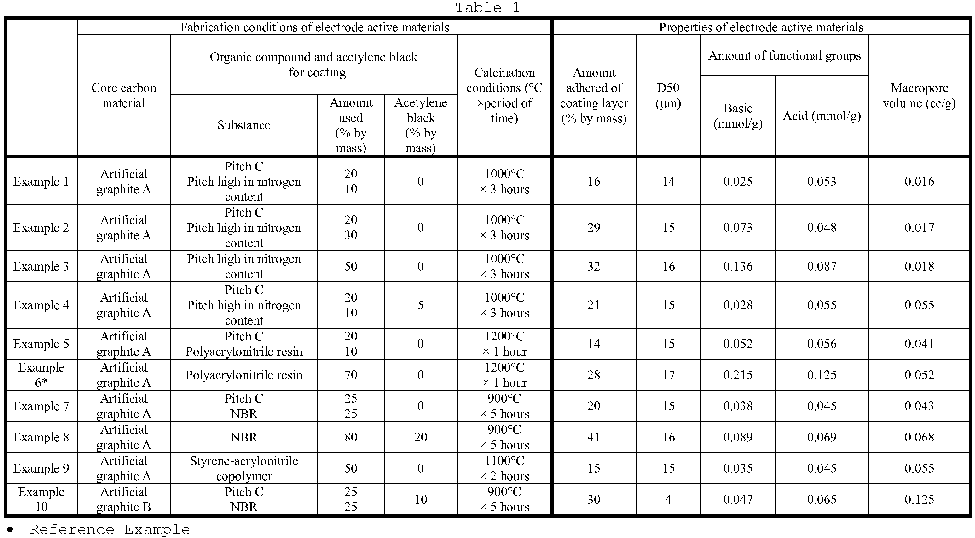

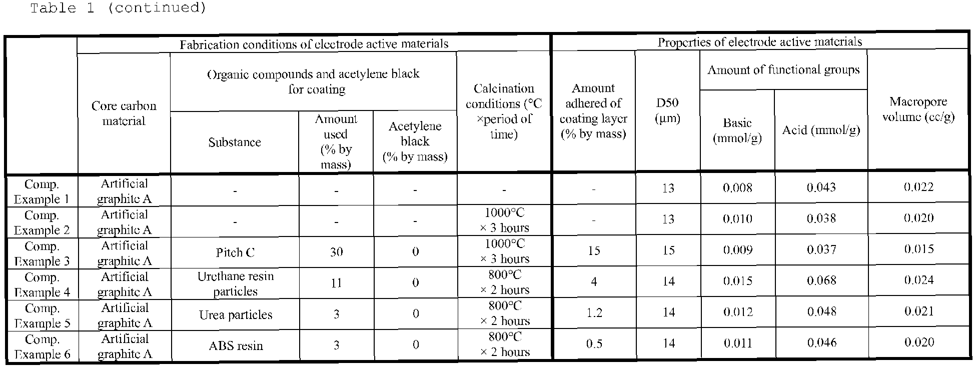

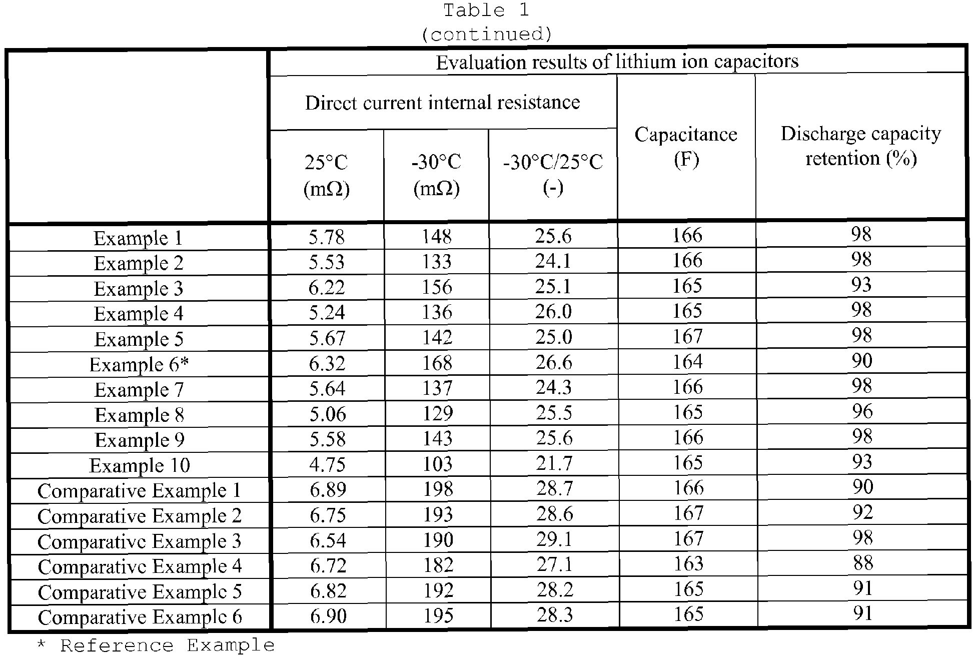

In Table 1, amounts of organic compounds and acetylene black for coating are indicated with percent by mass relative to the core-forming carbon material. In Table 1, "Amount adhered of coating layer" is a value calculated from an equation set forth below, under the assumption that an amount (g) of the core carbon material (artificial graphite) used for the production of the electrode active material is the same as a content (g) of the core carbon material in the resultant electrode active material.

Amount adhered of coating layer (% by mass) = 100 × { mass (g) of the resultant electrode active material - mass (g) of core carbon material used }/mass (g) of core carbon material used

Table 1 includes, in the evaluation results of the direct current internal resistances, a ratio of the -30°C direct current internal resistance to the 25°C direct current internal resistance (-30°C/25°C). That ratio which is smaller is preferred in the electrical storage devices.

While Examples provided herein illustrate lithium ion capacitors utilizing activated carbon in the positive electrodes, the present inventors have confirmed that lithium ion secondary batteries utilizing lithium cobaltate in the positive electrodes similarly achieve a decrease in direct current internal resistance at low temperatures by the use of the inventive electrode active material having basic functional groups in an amount of not less than 0.020 mmol/g.

Significant factors influencing the -30°C direct current internal resistance include the diameter of particles of the electrode active materials: the smaller the particle diameter is, the lower the resistance tends to be. Simply relying on this method, however, in some cases causes decrease in capacity retention due to the smaller particle diameter. By this method, concern arises with regard to possible adverse influence on initial charging efficiency (coulomb efficiency) particularly in lithium ion secondary batteries.

By the use of the electrode active materials having basic functional groups in an amount not less than the specific value, deterioration of the initial charge/discharge efficiency and decrease in cycle characteristics such as capacity retention are inhibited, and internal resistance at low temperatures can be decreased.

## Claims

1. An electrode active material comprising a carbon material and having 0.020 to 0.20 mmol/g of basic functional groups, as determined by performing titration,
wherein the carbon material is a composite carbon material that comprises a core-forming carbon material and a coating carbon material for coating at least part of the core-forming carbon material.

2. The electrode active material according to claim 1, wherein an organic compound serving as a raw material of the coating carbon material is at least one nitrogen-containing organic compound selected from the group consisting of a pitch, a thermoplastic resin, a thermosetting resin and a synthetic rubber.

3. The electrode active material according to claim 1 or 2, which has a 50% volume cumulative diameter D50 of 1 to 5 µm.

4. The electrode active material according to any one of claims 1 to 3, which has a volume of macropores with 50 to 400 nm pore diameter of from 0.01 to 0.40 cc/g.

5. An electrode comprising the electrode active material according to any one of claims 1 to 4.

6. An electrical storage device comprising the electrode according to claim 5 as a negative electrode.

## Patentansprüche

1. Elektrodenaktivmaterial, das ein Kohlenstoffmaterial umfasst und 0,020 bis 0,20 mmol/g basische funktionelle Gruppen aufweist, wie durch Durchführung von Titration bestimmt,
wobei das Kohlenstoffmaterial ein Verbundkohlenstoffmaterial ist, das ein Kern-bildendes Kohlenstoffmaterial und ein Beschichtungskohlenstoffmaterial zum Beschichten zumindest eines Teils des Kern-bildenden Kohlenstoffmaterials umfasst.

2. Elektrodenaktivmaterial nach Anspruch 1, wobei eine organische Verbindung, die als Ausgangsmaterial für das Beschichtungskohlenstoffmaterial dient, zumindest eine Stickstoffenthaltende organische Verbindung ist, ausgewählt aus der Gruppe bestehend aus einem Pech, einem thermoplastischen Harz, einem wärmehärtenden Harz und einem synthetischen Kautschuk.

3. Elektrodenaktivmaterial nach Anspruch 1 oder 2, das einen 50%igen Volumen-Kumulativen Durchmesser D50 von 1 bis 5 µm aufweist.

4. Elektrodenaktivmaterial nach einem der Ansprüche 1 bis 3, das ein Volumen von Makroporen mit 50 bis 400 nm Porendurchmesser von 0,01 bis 0,40 cc/g aufweist.

5. Elektrode, die das Elektrodenaktivmaterial nach einem der Ansprüche 1 bis 4 umfasst.

6. Elektrische Speichervorrichtung, die die Elektrode nach Anspruch 5 als negative Elektrode umfasst.

## Revendications

1. Matériau actif d'électrode comprenant un matériau carboné et ayant 0,020 à 0,20 mmol/g de groupes fonctionnels basiques, comme déterminé par mise en œuvre d'un titrage, dans lequel le matériau carboné est un matériau carboné composite qui comprend un matériau carboné formant un cœur et un matériau carboné de revêtement pour revêtir au moins une partie du matériau carboné formant un cœur.

2. Matériau actif d'électrode selon la revendication 1, dans lequel un composé organique servant de matière première du matériau carboné de revêtement est au moins un composé organique azoté choisi dans le groupe constitué par un brai, une résine thermoplastique, une résine thermodurcissable et un caoutchouc synthétique.

3. Matériau actif d'électrode selon la revendication 1 ou 2, qui a un diamètre cumulatif volumique à 50 %, D50, de 1 à 5 µm.

4. Matériau actif d'électrode selon l'une quelconque des revendications 1 à 3, qui a un volume de macropores ayant un diamètre de pore de 50 à 400 nm de 0,01 à 0,40 cm³/g.

5. Electrode comprenant le matériau actif d'électrode selon l'une quelconque des revendications 1 à 4.

6. Dispositif de stockage d'électricité comprenant l'électrode selon la revendication 5 en tant qu'électrode négative.
